# EUROPEAN PATENT APPLICATION

(11) **EP 3 587 835 A1**
(43) Date of publication of application: **01.01.2020**
(21) Application number: 18180315.6
(22) Date of filing: 28.06.2018
(51) Int. Cl.: F16B 12/34, F16B 7/10

(54) **A TABLE TOP PRIVACY SCREEN SYSTEM**

(71) Applicant: Rufac ApS, 5900 Rudkøbing (DK)
(72) Inventor: HANSSON, Claus, 5900 Rudkøbing (DK); MCGUIRE, Sean, 5900 Rudkøbing (DK)
(74) Representative: Hoffmann Dragsted A/S

(57) **Abstract**

The present invention relates to a table top privacy screen system, comprising a table top having a rim, a first face, and a second face, a number of brackets configured to be connected with the table top, the brackets comprise a receiving portion and a locking portion, a privacy screen having a height and a width, the privacy screen being arranged substantially perpendicularly to the table top at the rim of the table top for providing privacy for a user of the table top, wherein the privacy screen comprises a number of attachment means configured to cooperate with the brackets for positioning the privacy screen in relation to the table top. The present invention also relates to a table comprising the table top privacy screen system according to the present invention.

## Description

### Field of the invention

The present invention relates to a table top privacy screen system. The invention also relates to a table comprising the table top privacy screen system according to the present invention.

### Background art

Open-plan offices having a plurality of tables in the same room are becoming more and more common. It obviously provides possibilities for communication and dialogue between the persons using the tables, however, the individual privacy for each person is not present.

Hence, it has been normal to provide privacy screens between the tables, for instance privacy screens which may be movable on the floor or privacy screens mounted on the tables themselves.

Since the persons using the open-plan offices require individual and flexible solutions, table top mounted privacy screens have been more requested.

Hence, there is a need for a table top privacy screen system having a high degree of flexibility and which is easy to use.

### Summary of the invention

It is an object of the present invention to wholly or partly overcome the above disadvantages and drawbacks of the prior art. More specifically, it is an object to provide an improved table top privacy screen system which is easy to mount to the table top and which has a high degree of flexibility both when it concerns use and design.

The above objects, together with numerous other objects, advantages and features, which will become evident from the below description, are accomplished by a solution in accordance with the present invention by a table top privacy screen system, comprising:
- a table top having a rim, a first face, and a second face.
- a number of brackets configured to be connected with the table top, the brackets comprise a receiving portion and a locking portion, and
- a privacy screen having a height and a width, the privacy screen being arranged substantially perpendicularly to the table top at the rim of the table top for providing privacy for a user of the table top,
wherein the privacy screen comprises a number of attachment means configured to cooperate with the brackets for positioning the privacy screen in relation to the table top.

Hereby is obtained that privacy screens may be installed in an easy manner in relation to the table top. Furthermore, by the solution according to the invention, a flexible system is obtained which may easily be applied to different tables.

In addition, the receiving portion may comprise at least a first aperture configured to receive the attachment means.

Also, the attachment means may comprise at least a first aperture configured to receive a part of the receiving portion.

In an embodiment according to the invention, the attachment means may comprise a first fixation end part and a first body part, a cross section of the fixation end part being larger than the body part.

Furthermore, the receiving portion of the bracket may be arranged vertically. The locking portion may be arranged horizontally.

Moreover, the attachment means may comprise a second fixation end part and a second body part.

In addition, the first fixation end part and the second fixation end part may be arranged vertically above one another.

Also, the first aperture may comprise a first aperture section and a second aperture section.

Furthermore, the receiving portion or the attachment means may comprise a second aperture, the first aperture being arranged above the second aperture.

The attachment means may be arranged in a position different from a middle of the height of the privacy screen. In this way, it is possible to adjust the height of the privacy screen in relation to the table top, by flipping the privacy screen 180 deg. in order that the privacy screen may have a first position in which it provides a degree of privacy to the user above the table top and a second position in which it provides a degree of modesty below the table top. The first position and the second position and thereby the degrees of privacy and modesty may be changed by flipping or rotating the privacy screen 180 deg.

Moreover, the privacy screen may comprise two or more separate units. When interchanging the privacy screens, the height of the privacy screens in relation to the table top may be changed.

The body part may be delimited by two first fixation end parts arranged with a mutual distance.

Also, the privacy screen may be kept in a distance from the rim of the table top.

Furthermore, the attachment means and/or the brackets may be made of metal, wood, plastic or composites thereof or a combination thereof.

The first aperture section may be arranged above the second aperture section in order that the fixation end part may be inserted into the first aperture section and then lowered into the second aperture section, for instance by the aid of gravity.

Additionally, the first aperture section may have a first centre point and the second aperture section may have a second centre point, the first centre point and the second centre point being arranged directly above each other or the second centre point being offset in relation to the first centre point.

Moreover, the fixation end part may have an outer circumference, the first aperture section has a first inner circumference and the second aperture section has a second inner circumference, the first inner circumference being larger than the outer circumference and the second inner circumference being smaller than the outer circumference. Hereby it is obtained that the fixation end part in an easy manner may be introduced into the first aperture section and subsequently be moved into the second aperture section in order that the attachment means is/are secured to the bracket and thereby to the table top.

The fixation end part may be circular, elliptic, square, triangular, or similar shapes, and the first aperture may have a corresponding shape to that of the fixation part.

In addition, at least one projection may be arranged between the first aperture section and the second aperture section in order that when the body part passes the projection from the first aperture section to the second aperture section it is ensured that stays in position.

Also, the at least one projection may be configured to provide a tactile and/or audio feedback such as a click sound when the body part passes the projection in order that a user is alerted that the body part is positioned correctly.

The privacy screen may comprise one or more area(s) in which it comprises a plurality of vertically extending lamellar in order that it may be wrapped around a corner of the table top in said area. Hereby it is obtained that one privacy screen size may be used to different sizes of table tops. In addition, a flexible system is provided where the user may position the privacy screen to their individual wishes in an easy manner.

Furthermore, the privacy screen may be made of polymer, polyethylene (PET), wood, composite, glass or any combination thereof.

The receiving portion of the bracket may comprise a first fixation end part and a first body and the attachments means may comprise the first aperture configured to receive the first fixation end part and the first body.

The invention also relates to a table comprising the table top privacy screen system as described above.

### Brief description of the drawings

The invention and its many advantages will be described in more detail below with reference to the accompanying schematic drawings, which for the purpose of illustration show some non-limiting embodiments and in which:
Fig. 1 shows a table top privacy screen system, according to the invention, before the privacy screen is mounted to the table top,
Fig. 2 shows a table top privacy screen system with the privacy screen mounted to the table top,
Figs. 3-6 show an embodiment of the bracket,
Figs. 7-9 show an embodiment of the attachment means,
Figs. 10-13 show different views of the bracket and the attachment means in cooperation with each other,
Figs. 14-16 show an example of mounting the bracket to the table top,
Figs. 17-18 show an example of mounting the attachment means to the privacy screen,
Fig. 19 shows another embodiment of a table top privacy system having two separate units, and
Fig. 20 shows the table top privacy system has been flipped 180 degrees in relation to Fig, 2.

All the figures are highly schematic and not necessarily to scale, and they show only those parts which are necessary in order to elucidate the invention, other parts being omitted or merely suggested.

### Detailed description of the invention

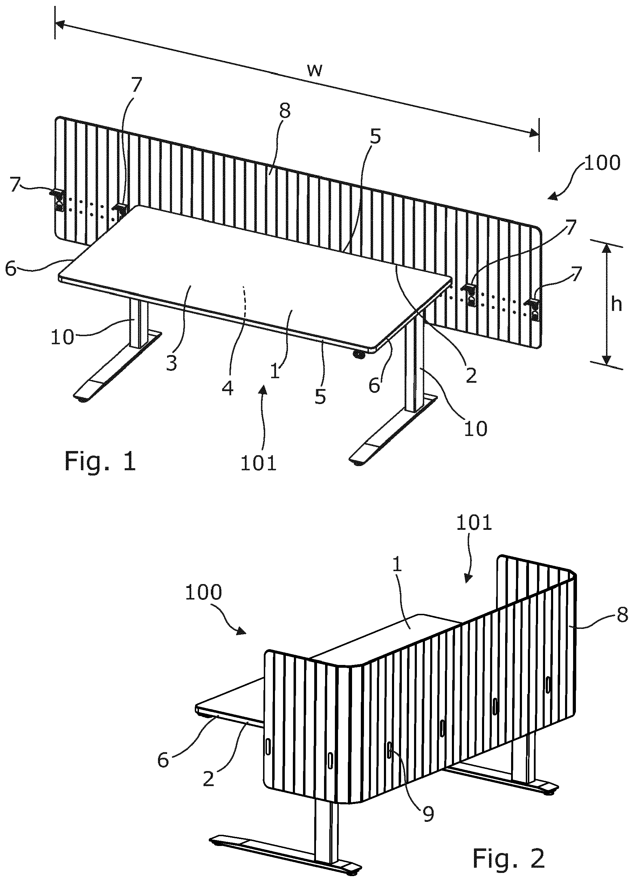

In Fig. 1, a table top privacy screen system 100 according to the present invention is shown. The table top privacy screen system 100 comprises a table top 1 having a rim 2, a first face 3 and a second face 4. The rim 2 is extending along the entire edge of the table top 1. The first face 3 is the top face of the table top and the second face 4 is the bottom face of the table top. In addition, the table top has, in this embodiment, a square form with two longitudinal sides 5 and two end sides 6.

The table top privacy screen system 100 further comprises a number of brackets 7 configured to be connected with the table top 1. The brackets 7 comprise a receiving portion and a locking portion which will be described further below. A privacy screen 8 having a height h and a width w is also comprised in the table top privacy screen system 100, the privacy screen being arranged substantially perpendicularly to the table top 1 at the rim 2 of the table top 1 for providing privacy for a user of the table top. In Fig. 1, the privacy screen 8 is not yet mounted to the table top 1.

Furthermore, the privacy screen 8 comprises a number of attachment means configured to cooperate with the brackets 7 for positioning the privacy screen in relation to the table top 1. The attachment means will be further described below.

In addition, the table top 1 is in this embodiment mounted on two legs 10 so as to provide a table 101.

In Fig. 2, the privacy screen 8 is mounted to the table top 1 for providing a table 101 with a privacy screen 8. Moreover, the privacy screen 8 is, in this embodiment, provided on one of the longitudinal sides of the table top 1 and partly on both end sides 6 of the table top 1 by wrapping it partly along the rim 2 of the table top 1. A part of the attachment means 9 is shown on the privacy screen 8.

In Fig. 2, one configuration of the table top privacy screen system 100 is shown. In other configurations the privacy screen may have other heights and/or widths and it may be divided into different units.

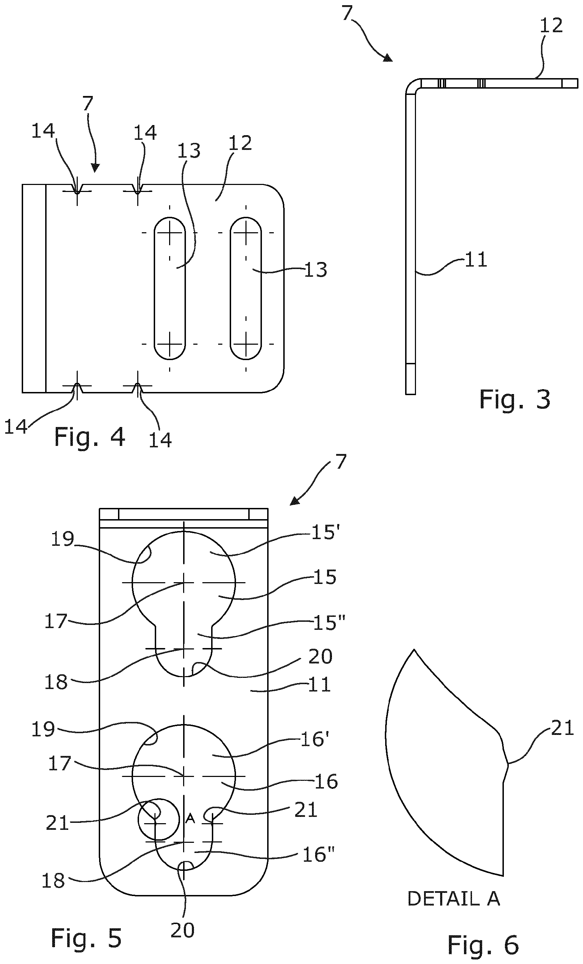

In Fig. 3, a side view of an embodiment of the bracket 7 is shown. In this embodiment the bracket comprises a receiving portion 11 and a locking portion 12. The receiving position 11 is configured to cooperate with the attachment means and the locking portion is configured to be connected with the table top. In the present embodiment, the receiving portion 11 is arranged perpendicularly to the locking portion 12.

In Fig. 4, a top view of the bracket 7 is shown. The locking portion 12 has in this embodiment two holes 13 which are configured to receive either bolts or screws for facilitating the connection of the bracket 7 to the table top. The locking portion 12 further comprises two slits 14 on each side of the locking portion 12. The slits 14 are configured to assist in positioning and aligning the receiving porting of the bracket 7 in the right position in relation to the table top.

In Fig. 5, an embodiment of the receiving portion 11 of the bracket 7 is shown. The receiving portion 11 comprises a first aperture 15 and a second aperture 16 each configured to receive the attachment means. The first aperture 15 is arranged above the second aperture 16. Each aperture 15, 16 comprises a first aperture section 15', 16'and a second aperture section 15", 16".

The first aperture section 15', 16' has a first centre point 17 and the second aperture section 15", 16" has a second centre point 18. The first centre point 17 and the second centre point 18 are in this embodiment arranged directly above each other. In another embodiment, the second centre point may be offset in relation to the first centre point.

The first aperture section 15', 16' is arranged above the second aperture section 15", 16" so that the attachment means (not shown) may be inserted into the first aperture section 15', 16' and then lowered into the second aperture section 15", 16" for instance by pressing it downwards or simply by the aid of gravity.

The first aperture section 15', 16' has a first inner circumference 19 and the second aperture section 15", 16" has a second inner circumference 20.

In the embodiment shown in Fig. 5, the receiving portion 11 has two apertures. In other embodiments it may have only one or it may have a plurality of apertures.

In the present embodiment, the second aperture 16 has two projections 21 arranged between the first aperture section 16' and the second aperture section 16" so that when the attachment means (not shown) pass(es) the projections 21 from the first aperture section 16' to the second aperture section 16" it is ensured that the attachment means stays in position.

Furthermore, the projections 21 may be configured to provide a tactile and/or audio feedback such as a click sound when the attachment means pass(es) the projections so that a user is alerted that the attachment means is/are positioned correctly.

In Fig. 6, the area A of Fig. 5 is shown in an enlarged view wherein the projection 21 is shown.

In the present embodiment, the second aperture 16 has been provided with two projections 21. However, both the first aperture and the second aperture may have projections.

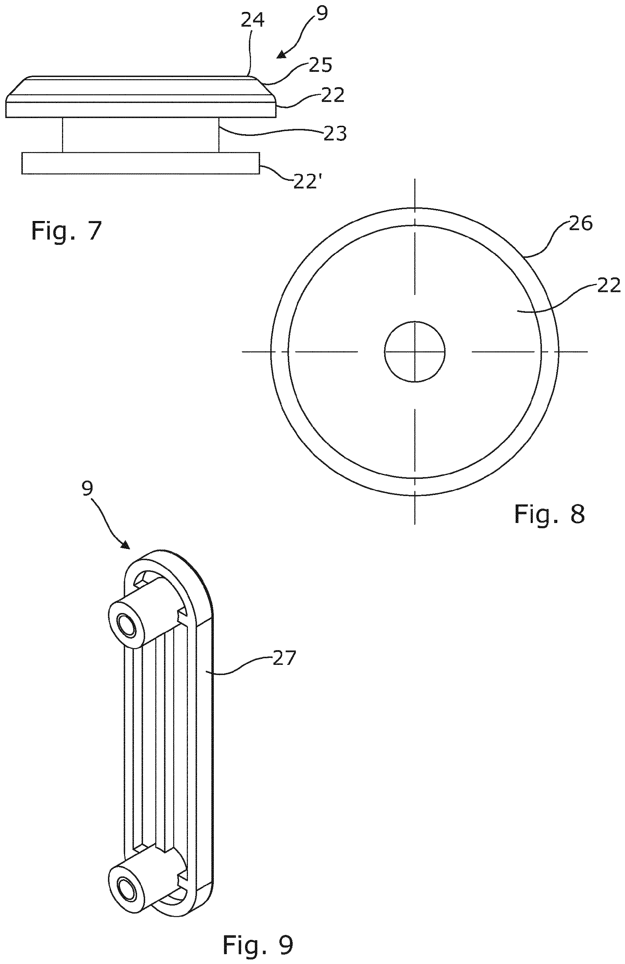

In Fig. 7, an embodiment of the attachment means 9 is shown. The attachment means 9 comprises a first fixation end part 22 and a first body part 23, a cross section of the fixation end part 22 is larger than the body part 23. In this embodiment, the body part 23 is delimited by two first fixation end parts 22, 22' arranged with a mutual distance. The distance between the two first fixation end parts 22, 22' may substantially correspond to the thickness of the receiving portion of the bracket or it may be slightly larger than the thickness.

In the present embodiment, the two first fixation end parts 22, 22' have different widths wherein the first fixation end part 22 is larger than the first fixation end part 22'. Furthermore, the first fixation end part 22 has a leading face 24 which is provided with a slanting face 25, facilitating the insertion of the first fixation end part 22 into the receiving portion of the bracket.

In Fig. 8, the first fixation end part 22 is shown with a circular shape. The fixation end part 22 has an outer circumference 26.

In other embodiments, the fixation end part may have other shapes such as for instance elliptic, square, triangular, or similar shapes, and the first aperture of the receiving portion may have a corresponding shape to that of the fixation end part.

In Fig. 9, a connection part 27 of the attachment means 9 is shown. The connection part is configured to connect the first fixation end part (not shown) to the privacy screen. The present embodiment of the connection part 27 is configured to connect a first fixation end part and a second fixation end part.

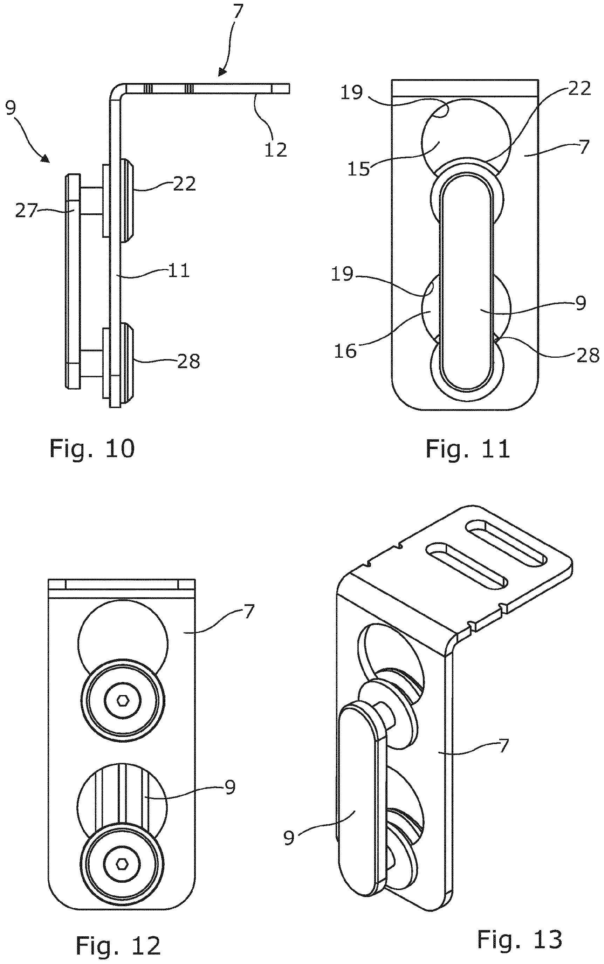

Figs. 10-13 show different views of the bracket 7 and the attachment means 9 in cooperation with each other. In Fig. 10, the connection is shown in a side view. In the present embodiment, the attachment means comprises a first fixation end part 22 and a second fixation end part 28 connected with each other via the connection part 27.

Fig. 11 shows a front view of the connection between the bracket 7 and the attachment means 9. The first fixation end part 22 and the second fixation end part 28 have been inserted into the first aperture 15 and second aperture 16, respectively. Subsequently, the fixation end parts 22, 28 have been moved into the second aperture sections for positioning.

As described above, the fixation end parts 22, 28 have an outer circumference 26. The first aperture sections 19 have a first inner circumference 19 and the second aperture sections (not shown) have a second inner circumference. The first inner circumference 19 is larger than the outer circumference 26 and the second inner circumference is smaller than the outer circumference 26. Hereby it is obtained that the fixation end part in an easy manner may be introduced into the first aperture section and subsequently be moved into the second aperture section so that the attachment means is/are secured to the bracket and thereby to the table top.

As seen in Fig. 11, the first fixation end part 22 and the second fixation end part 28 are arranged vertically above one another. In addition, the receiving portion of the bracket is also arranged vertically.

Fig. 12 shows, in a rear view, the attachment means 9 connected with the bracket 7, and Fig. 13 shows the connection of the bracket 7 and the attachment means 9 in a perspective view.

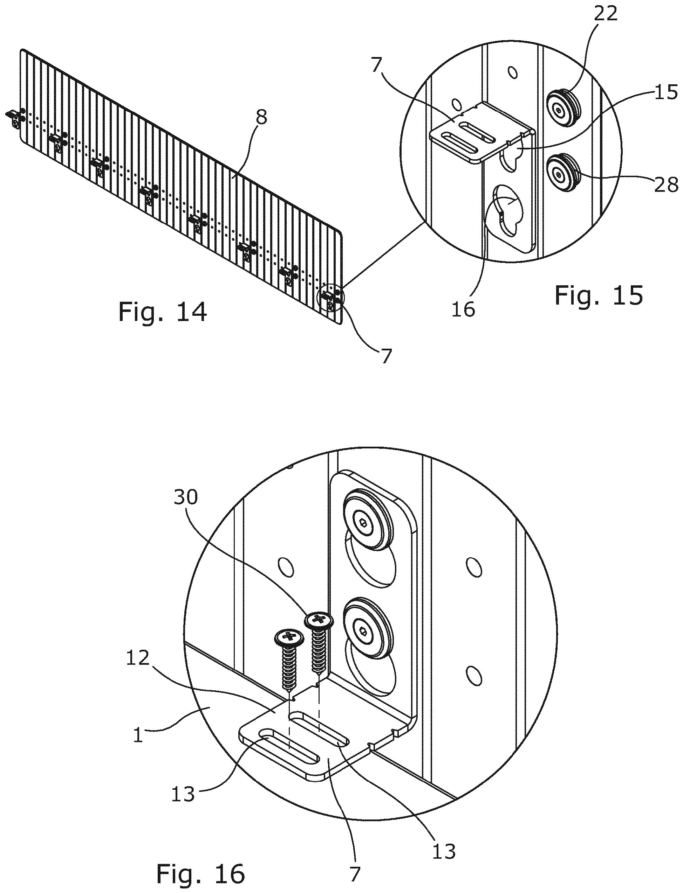

Fig. 14 shows an example of connecting the brackets 7 to the privacy screen 8 which again is shown in an enlarged view in Fig. 15. In this embodiment, the bracket 7 is connected with the attachment means 9 by inserting the first fixation end parts 22 and the second fixation end parts 28 of the attachment means 9 into the first aperture 15 and the second aperture 16 of the bracket 7. Hereinafter, the bracket 7 may be fastened to the table top 1 by screws 30 through the holes 13 of the locking portion 12 as shown in Fig. 16. This is one example of mounting the privacy screen. In another embodiment, the bracket may be mounted on the table top before the privacy screen is mounted on the brackets.

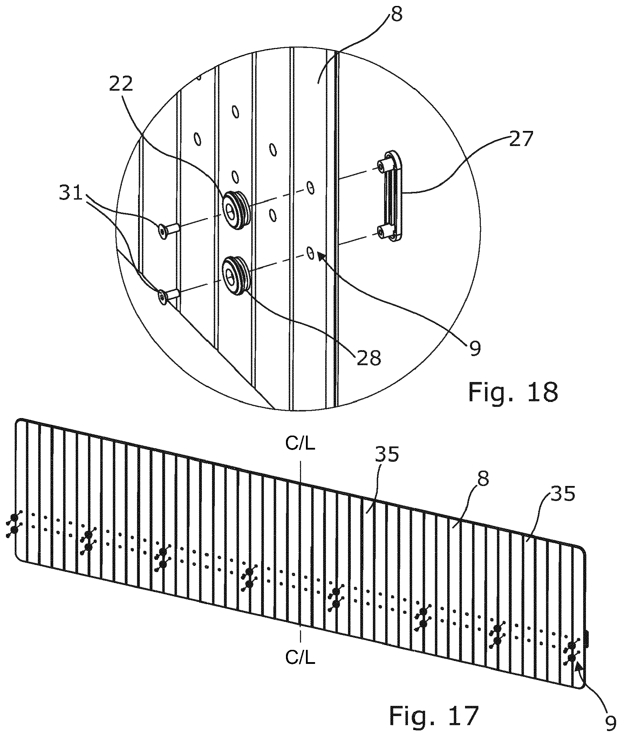

In Figs. 17 and 18, an example of how to mount the attachment means to the privacy screen is shown. As shown in the enlarged view of Fig. 18, the connection part 27 is arranged on one side of the privacy screen and the first and the second fixation end parts 22, 28 are connected with the connection part 27 from the opposite side of the privacy screen 8 via bolts 31.

As seen from Fig. 17, the attachment means 9 is/are arranged in a position different from a middle of the height of the privacy screen. In this way, it is possible to adjust the height of the privacy screen in relation to the table top by flipping the privacy screen 180 deg., so that the same privacy screen has a first position in which it provides a degree of privacy to the user above the table top and a second position in which it provides a degree of modesty below the table top. The first position and the second position and thereby the degrees of privacy and modesty may be changed by flipping the privacy screen 180 deg.

The privacy screen may comprise two separate units (not shown). When interchanging the privacy screens, the height of the privacy screens in relation to the table top is changed.

In addition, the attachment means 9 and/or the brackets 7 may be made of metal, wood, plastic or composites thereof, or a combination thereof.

Furthermore, the privacy screen 8 may comprise one or more area(s) in which it comprises a plurality of vertically extending lamellar 35 so that it may be wrapped around a corner of the table top in said area, as shown in Fig. 2. Hereby it is obtained that one privacy screen size may be used to different sizes of table tops. In addition, a flexible system is provided where the user may position the privacy screen to their individual wishes.

The privacy screen 8 may be made of polymer, polyethylene (PET), wood, composite, glass or any combination thereof.

Above an embodiment of the invention has been described, however, in a not shown embodiment the receiving portion of the bracket may comprise a first fixation end part and a first body and the attachments means may comprise the first aperture configured to receive the first fixation end part and the first body.

Furthermore, the privacy screen(s) may have two end sections. These end sections may be reinforced so that they are able to withstand any load exerted to them. This could for instance be by applying rigid material to the end sections.

In another embodiment, the reinforcement of the end sections may be obtained by the end sections of the privacy screen being bent slightly inwards during the manufacturing of the privacy screen so that when the privacy screen is mounted on the table top, according to the present invention, the end section will bend slightly inwards against the table top. By this slightly bent it is obtained that the end sections are reinforced without jeopardising the design of the privacy screen.

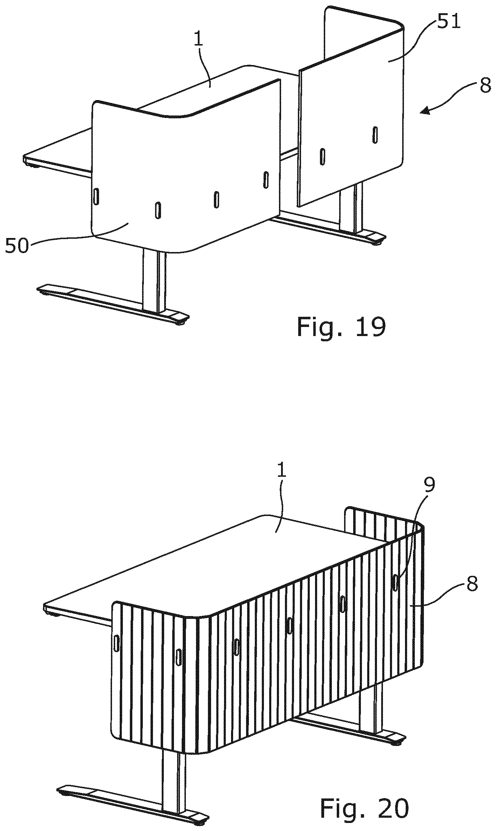

In Fig. 19 the privacy screen 100 comprises two separate units 50, 51. The separate units 50, 51 are arranged with a mutual distance between them. In another embodiment, the two separate units may abut each other so that they appear to be one privacy screen. Hereby, handling and mounting of the privacy screen 8 in relation to the table top 1 is facilitated. If only one person is mounting the privacy screen it may be an advantage that the privacy screen has two separate units 50, 51 so that the person has less weight to handle.

The privacy screen may also comprise a plurality of separate units, for instance three, four or even a higher number,

Furthermore, in Fig. 19 the separate units 50, 51 of the privacy screen 8 are shown without the vertically extending lamellar whereby the separate units 50, 51 are designed with a bent area to wrap the corners of the table top.

When the privacy screen wraps a corner of the table top, the bent of the privacy screen in the corner provides strength and rigidity to the connection between the privacy screen and the table top so that the privacy screen may withstand higher not-intended loads on the privacy screen.

In Fig. 20, the privacy screen 8 of Fig. 2 has been flipped 180 degrees so that the privacy screen 8 in Fig. 20 has been moved, i.e. rotated, so that the first position now provide a lower degree of privacy to the user above the table top, and the second position provides a higher degree of modesty below the table top than the positions of the privacy screen 8 shown in Fig. 2. Hence, by arranging the attachment means 9 in a position different from a middle of the height of the privacy screen 8, it is possible to flip the privacy screen to provide the desired privacy and/or modesty for the user of the table

Although the invention has been described in the above in connection with preferred embodiments of the invention, it will be evident for a person skilled in the art that several modifications are conceivable without departing from the invention as defined by the following claims.

## Claims

1. A table top privacy screen system (100), comprising:
- a table top (1) having a rim, a first face, and a second face,
- a number of brackets (7) configured to be connected with the table top, the brackets comprise a receiving portion (11) and a locking portion (12), and
- a privacy screen (8) having a height (h) and a width (w), the privacy screen being arranged substantially perpendicularly to the table top at the rim of the table top for providing privacy for a user of the table top,
wherein the privacy screen (8) comprises a number of attachment means (9) configured to cooperate with the brackets (7) for positioning the privacy screen in relation to the table top.

2. A table top privacy screen system (100) according to claim 1, wherein the receiving portion (11) comprises at least a first aperture (15) configured to receive the attachment means.

3. A table top privacy screen system (100) according to claim 1, wherein the attachment means (9) comprise(s) at least a first aperture configured to receive a part of the receiving portion.

4. A table top privacy screen system (100) according to claim 2, wherein the attachment means (9) comprise(s) a first fixation end part (22) and a first body part (23), a cross section of the fixation end part being larger than the body part.

5. A table top privacy screen system (100) according to claim 4, wherein the attachment means (9) comprise(s) a second fixation end part (28) and a second body part.

6. A table top privacy screen system (100) according to claim 5, wherein the first fixation end part (22) and the second fixation end part (28) are arranged vertically above one another.

7. A table top privacy screen system (100) according to any of the preceding claims, wherein the first aperture (15) comprises a first aperture section (15') and a second aperture section (15").

8. A table top privacy screen system (100) according to any of claims 2 or 3, wherein the receiving portion (11) or the attachment means (9) comprise(s) a second aperture (16), the first aperture being arranged above the second aperture.

9. A table top privacy screen system (100) according to any of the preceding claims, wherein the attachment means (9) is/are arranged in a position different from a middle of the height of the privacy screen (8).

10. A table top privacy screen system (100) according to claim 7, wherein the first aperture section (15') is arranged above the second aperture section (15") in order that the fixation end part may be inserted into the first aperture section and then lowered into the second aperture section.

11. A table top privacy screen system (100) according to claim 7 and/or claim 10, wherein the first aperture section (15') has a first centre point (17) and the second aperture section (15") has a second centre point (18), the first centre point and the second centre point being arranged directly above each other or the second centre point being offset in relation to the first centre point.

12. A table top privacy screen system (100) according to any of claims 7, 10-11, wherein the fixation end part has an outer circumference (26), the first aperture section has a first inner circumference (19) and the second aperture section has a second inner circumference (20), the first inner circumference (19) being larger than the outer circumference (26) and the second inner circumference (20) being smaller than the outer circumference (26).

13. A table top privacy screen system (100) according to any of claims 7, 10-12, wherein at least one projection (21) is arranged between the first aperture section and the second aperture section in order that when the body part passes the projection from the first aperture section to the second aperture section, it is ensured the attachment means stays in position.

14. A table top privacy screen system (100) according to any of the preceding claims, wherein the privacy screen (8) comprises one or more area(s) in which it comprises a plurality of vertically extending lamellar (35) in order that it may be wrapped around a corner of the table top (1) in said area.

15. A table (101) comprising the table top privacy screen system (100) according to any of the preceding claims.
